# EUROPÄISCHE PATENTANMELDUNG

(11) **EP 2 497 701 A1**
(43) Veröffentlichungstag der Anmeldung: **12.09.2012**
(21) Anmeldenummer: 11157912.4
(22) Anmeldetag: 11.03.2011
(51) Int. Cl.: B62D 47/02, B62D 53/00

(54) **Drehgelenk für ein Gelenkfahrzeug**

(71) Anmelder: HEMSCHEIDT FAHRWERKTECHNIK GmbH & Co. KG, 42781 Haan-Gruiten (DE)
(72) Erfinder: Runkel, Walter, 53547, Leubsdorf (DE)
(74) Vertreter: Patentanwälte Dr. Solf & Zapf

(57) **Zusammenfassung**

Die vorliegende Erfindung betrifft ein Drehgelenk (1) für ein Gelenkfahrzeug (2), bestehend aus zwei um eine Drehachse (8) relativ zueinander drehbeweglich miteinander verbundenen Gelenkteilen (4, 6). Jedes Gelenkteil (4, 6) weist ein Anschlusselement (10, 12) zur starren Befestigungsverbindung mit einem Fahrzeugteil (2a, 2b) des Gelenkfahrzeugs (2) auf. Hierbei ist mindestens eines der Gelenkteile (4, 6) mit seinem zugehörigen Anschlusselement (10/12) über eine Schnellkupplungseinrichtung (22) werkzeuglos trennbar und kuppelbar verbunden. Dadurch können die Fahrzeugteile (2a, 2b) des Gelenkfahrzeugs (2) voneinander getrennt werden, so dass der vordere Teil (2a) bei Bedarf auch ohne den hinteren Teil (2b) betrieben werden kann.

## Beschreibung

Die vorliegende Erfindung betrifft gemäß dem Oberbegriff des unabhängigen Anspruchs 1 ein Drehgelenk für ein Gelenkfahrzeug, bestehend aus zwei um eine Drehachse relativ zueinander drehbeweglich miteinander verbundenen Gelenkteilen, wobei jedes Gelenkteil ein Anschlusselement zur starren Befestigungsverbindung mit einem Fahrzeugteil des Gelenkfahrzeugs aufweist.

Ein solches Drehgelenk ist beispielsweise in dem Dokument DE 103 34 971 A1 beschrieben, und zwar in einer besonderen Ausgestaltung mit einer Sensoreinrichtung zum Erfassen der Winkelauslenkung gegenüber einer Mittelstellung der beiden Gelenkteile.

Solche Drehgelenke werden in Gelenkfahrzeugen, wie insbesondere Gelenkbussen, eingesetzt, um einen Vorderwagen gelenkig mit einem Hinterwagen, dem so genannten Nachläufer, zu verbinden. Das Gelenk ist einerseits für Kurvenfahrten zur relativen Schwenkbewegung um die vertikale Drehachse ausgelegt. Andererseits müssen sich aber in der Praxis die beiden Fahrzeugteile auch gegeneinander heben und senken, d. h. "nicken" können. Die Gelenkteile des Drehgelenkes werden bisher über ihre Anschlusselemente starr an den Fahrzeugteilen befestigt, und zwar fest verschraubt und/oder verschweißt, so dass die Fahrzeugteile betrieblich nicht trennbar sind.

Gelenkfahrzeuge werden in der Praxis üblicherweise in Zeiten mit höherem Fahrgast-Aufkommen eingesetzt; in ruhigeren Verkehrszeiten reduziert sich mit Gelenkfahrzeugen aber die Wirtschaftlichkeit; entweder sie fahren unterbesetzt, so dass sie zu groß sind, oder sie werden durch kleinere Fahrzeuge ersetzt, so dass sie zeitweise stillstehen, was aber in jedem Fall unwirtschaftlich ist.

Der vorliegenden Erfindung liegt die Aufgabe zu Grunde, die Nutzungsmöglichkeiten von Gelenkfahrzeugen zu erweitern und dadurch eine höhere Wirtschaftlichkeit zu erreichen.

Erfindungsgemäß wird dies mit einem Drehgelenk gemäß dem unabhängigen Anspruch 1 erreicht. Vorteilhafte Weiterbildungen der Erfindung sind in den abhängigen Ansprüchen sowie auch in der nachfolgenden Beschreibung enthalten.

Demnach ist erfindungsgemäß vorgesehen, dass mindestens eines der Gelenkteile des Drehgelenkes mit seinem zugehörigen Anschlusselement über eine Schnellkupplungseinrichtung werkzeuglos trennbar und kuppelbar verbunden ist. Durch diese erfindungsgemäße Ausgestaltung des Drehgelenkes und des zugehörigen Anschlusselementes wird erstmals die Möglichkeit geschaffen, das hintere Fahrzeugteil schnell und einfach betriebstechnisch von dem Vorderwagen trennen zu können, so dass dann der Vorderwagen allein als "normales" bzw. kleineres Fahrzeug weiter benutzt werden kann.

In bevorzugter Ausgestaltung ist hierzu die Schnellkupplungseinrichtung zwischen dem an einem vorderen Fahrzeugteil befestigten oder zu befestigenden Anschlusselement und dem zugehörigen Gelenkteil vorgesehen. Folglich bleibt das gesamte Drehgelenk - mit Ausnahme nur des vorderen Anschlussteils - am hinteren Fahrzeugteil befestigt. Dadurch ist das hintere Fahrzeugteil zusammen mit dem Drehgelenk vom Vorderwagen abkoppelbar. Diese Ausführung eignet sich speziell für so genannte Puller, wobei ein Antrieb im Vorderwagen angeordnet ist und der Nachläufer ohne Antrieb wie ein Anhänger nachgezogen wird. Somit kann der Vorderwagen auch allein, ohne den Nachläufer, betrieben werden.

In aller Regel ist bei einem Gelenkbus das Drehgelenk von einer drehbaren Bodenplatte, häufig auch Drehscheibe genannt, abgedeckt. Diese Bodenplatte wird zusammen mit dem Drehgelenk abgekoppelt und verbleibt folglich auch am Nachläufer. Entsprechendes gilt auch für einen Faltenbalg, der den Übergangsbereich zwischen Vorder- und Hinterwagen zumindest oben und seitlich überdeckt.

Nach dem Abkoppeln des Hinterwagens kann die entstehende, hintere Wagenöffnung des Vorderwagens mit Vorteil mit einem geeigneten Verschluss, wie z. B. einem Rollladen oder dergleichen, geschlossen werden.

In weiterer vorteilhafter Ausgestaltung ist die Schnellkupplungseinrichtung als eine über eine Verriegelungseinrichtung lösbar verriegelbare Steckkupplung ausgebildet, wobei die Steckkupplung im verriegelten Zustand über eine Spanneinrichtung in Fügerichtung spielfrei verspannbar ist. Durch dieses Verspannen wird das Gelenk fest gegen das am Fahrzeug starr befestigte Anschlusselement verspannt, so dass das Fahrzeugteil mit dem zugehörigen Gelenkteil mechanisch eine Einheit bildet. Im Betrieb gewährleistet deshalb das erfindungsgemäße Gelenk die gleiche hohe Sicherheit wie bisher in der fest, untrennbar montierten Ausführung.

Für die Ausgestaltung der Schnellkupplungseinrichtung mit ihren Bestandteilen, insbesondere der Verriegelungseinrichtung und der Spanneinrichtung, gibt es im Rahmen der Erfindung sicherlich zahlreiche Möglichkeiten, von denen im Folgenden zwei bevorzugte Ausführungen beispielhaft genauer beschrieben werden sollen. Es handelt sich um eine Verriegelung mit einem linear verschiebbaren Riegelschieber, wobei das Verspannen entweder auch durch Linearverschiebung eines Spannschiebers oder durch Verdrehen von Drehspannern jeweils über keilartige bzw. gewindeartige Spannflächen erfolgt. Die Betätigung kann motorisch, insbesondere über eine Druckmittel-Zylinderanordnung, oder manuell über eine mechanische Hebelanordnung erfolgen. Dabei sind vorteilhafterweise keine Werkzeuge erforderlich.

Anhand der Zeichnungen soll die Erfindung beispielhaft genauer erläutert werden. Es zeigen:
- Fig. 1: eine schematische Seitenansicht eines Gelenkfahrzeugs, beispielhaft als Gelenkbus, mit Vorderwagen und Hinterwagen,
- Fig. 2: eine Perspektivansicht eines erfindungsgemäßen Drehgelenkes zur gelenkig koppelnden Anordnung zwischen Vorder- und Hinterwagen z. B. des Gelenkfahrzeugs nach Fig. 1,
- Fig. 3: eine Ansicht des Drehgelenkes mit einer dieses abdeckenden Bodenplatte,
- Fig. 4: eine Ansicht des Gelenkfahrzeugs nach Fig. 1 in einem getrennten Zustand von Vorder- und Hinterwagen,
- Fig. 5: eine Ansicht des Drehgelenkes wie in Fig. 3, jedoch mit teilweise hochgeklappter Bodenplatte zur Einsicht auf die trennbaren Teile des erfindungsgemäßen Drehgelenkes,
- Fig. 6: eine Ansicht wie in Fig. 5 im getrennten Zustand der erfindungsgemäßen Schnellkupplungseinrichtung,
- Fig. 7: eine perspektivische Explosionsdarstellung des erfindungsgemäßen Drehgelenkes in einer ersten Ausführungsform der Schnellkupplungseinrichtung,
- Fig. 8: eine Perspektivansicht des Drehgelenkes in der Ausführung gemäß Fig. 7 im montierten Zustand und in der verriegelten und verspannten Lage der Schnellkupplungseinrichtung,
- Fig. 9: eine perspektivische Explosionsdarstellung ähnlich Fig. 7, jedoch in einer zweiten, bevorzugten Ausführungsform der Schnellkupplungseinrichtung, und
- Fig. 10: eine Perspektivansicht analog zu Fig. 8 in der Ausführungsform gemäß Fig. 9.

In den verschiedenen Figuren der Zeichnung sind gleiche Teile stets mit den gleichen Bezugszeichen versehen und werden daher in der Regel auch jeweils nur einmal beschrieben.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

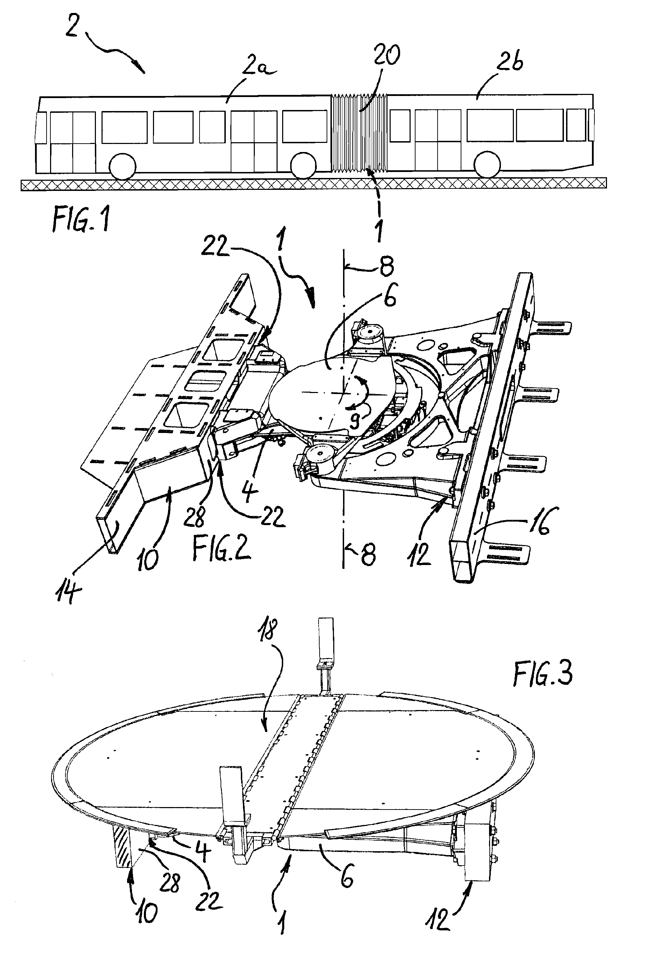

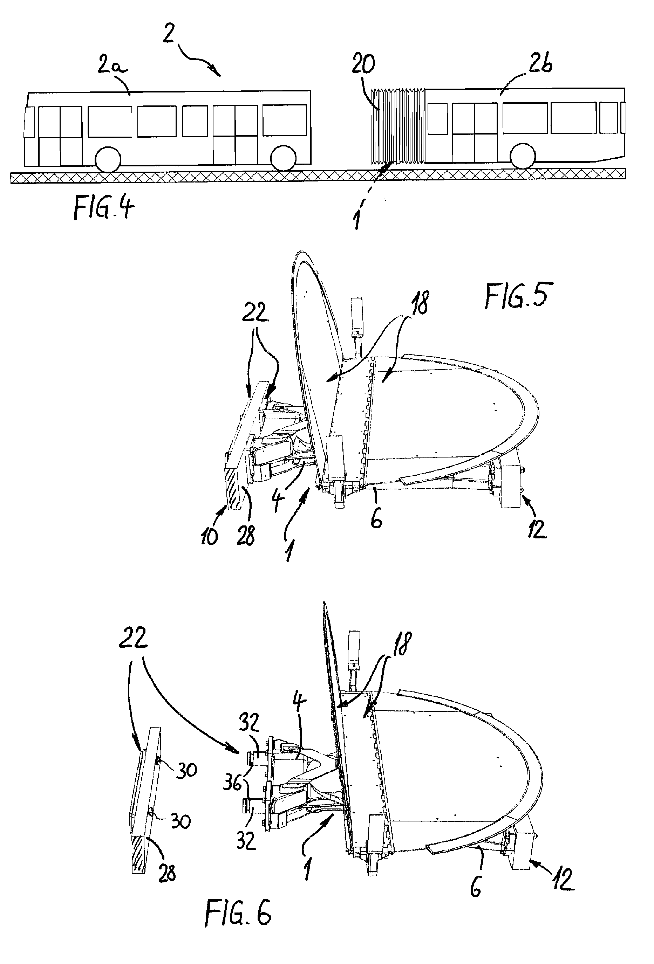

In Fig. 2 ist ein erfindungsgemäßes Drehgelenk 1 in einer bevorzugten Ausführung dargestellt. Dieses Drehgelenk 1 ist für ein beispielhaft in Fig. 1 und 4 dargestelltes Gelenkfahrzeug 2 zur gelenkigen Verbindung zwischen einem vorderen Fahrzeugteil 2a, d. h. einem Vorderwagen, und einem hinteren Fahrzeugteil 2b, einem Hinterwagen oder Nachläufer, vorgesehen. Dazu besteht das Drehgelenk 1 aus zwei Gelenkteilen 4, 6, die miteinander derart gelenkig verbunden sind, dass sie relativ zueinander um eine vertikale Drehachse 8 drehbeweglich sind, was in Fig. 2, 7 und 9 jeweils durch einen Doppelpfeil 9 angedeutet ist. Zur festen Anschlussverbindung mit den Fahrzeugteilen 2a bzw. 2b weist jedes Gelenkteil 4, 6 ein Anschlusselement 10, 12 auf. So ist das erste Gelenkteil 4 über sein Anschlusselement 10 fest, starr mit dem vorderen Fahrzeugteil 2a zu verbinden, und das zweite Gelenkteil 6 wird über sein Anschlusselement 12 fest, starr mit dem hinteren Fahrzeugteil 2b verbunden. Für diese starren Verbindungen weist jedes Anschlusselement 10, 12 gemäß Fig. 2 eine balkenartige Quertraverse 14, 16 auf, die über geeignete, nicht genauer bezeichnete Verbindungsmittel an dem jeweiligen Fahrzeugteil 2a bzw. 2b zu befestigen ist. Diese Befestigung erfolgt beispielsweise über Schraubverbindungen und/oder Schweißverbindungen, und zwar so, dass eine Demontage nicht oder allenfalls mit Werkstattaufwand möglich ist.

Wie sich aus Fig. 3, 5 und 6 ergibt, ist das Drehgelenk 1 insbesondere bei einer Anwendung in einem Gelenkbus von oben mit einer Bodenplatte 18 abgedeckt, die gemeinsam mit dem einen Gelenkteil 6 relativ zu dem anderen Gelenkteil 4 um die Drehachse 8 verdrehbar ist. Zudem ist gemäß Fig. 1 und 4 der Zwischenraum zwischen den Fahrzeugteilen 2a, 2b zumindest seitlich und oben mit einem üblichen Faltenbalg 20 geschlossen.

Erfindungsgemäß ist nun vorgesehen, dass mindestens eines der Gelenkteile 4, 6 mit seinem zugehörigen Anschlusselement 10 bzw. 12 über eine Schnellkupplungseinrichtung 22 werkzeuglos trennbar und kuppelbar verbunden ist. In bevorzugter Ausgestaltung ist diese Schnellkupplungseinrichtung 22 zwischen dem an dem vorderen Fahrzeugteil 2a befestigten oder zu befestigenden Anschlusselement 10 und dem zugehörigen ersten Gelenkteil 4 vorgesehen. Trotz der festen, prinzipiell unlösbaren Verbindung des Anschlusselementes 10 am Fahrzeugteil 2a kann durch die Erfindung der hintere Fahrzeugteil 2b schnell und einfach vom vorderen Fahrzeugteil 2a abgekoppelt werden. Dazu braucht nur die Schnellkupplungseinrichtung 22 gelöst zu werden, so dass das gesamte Drehgelenk 1 - mit Ausnahme nur des vorderen Anschlussteils 10 - gemeinsam mit dem hinteren Fahrzeugteil 2b abgekoppelt wird. Das Drehgelenk 1 bleibt mit seinem zweiten Gelenkteil 6 über das Anschlusselement 12 am hinteren Fahrzeugteil 2b befestigt. Auch die Bodenplatte 18 und der Faltenbalg 20 werden gemeinsam mit dem hinteren Fahrzeugteil 2b vom vorderen Fahrzeugteil 2a abgetrennt.

In den dargestellten, bevorzugten Ausführungsbeispielen ist die Schnellkupplungseinrichtung 22 als eine über eine Verriegelungseinrichtung 24 lösbar verriegelbare Steckkupplung ausgebildet. Die Steckkupplung ist bevorzugt so ausgelegt, dass eine Füge- und Löserichtung der Längsachse des Gelenkfahrzeugs 2 entspricht. Zudem ist es wesentlich, dass die Steckkupplung über eine Spanneinrichtung 26 in Fügerichtung spielfrei verspannbar ist. Dadurch kann das Gelenkteil 4 über die Spanneinrichtung 26 spielfrei und fest gegen das Anschlusselement 10 verspannt werden, so dass praktisch eine mechanische Einheit des Gelenkteils 4 mit seinem Anschlusselement 10 entsteht.

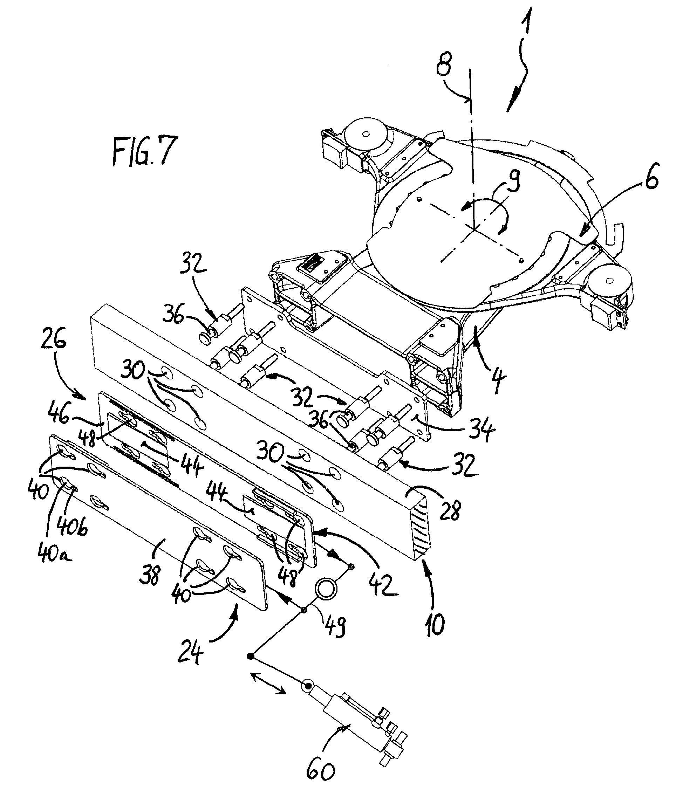

In beiden Ausführungsbeispielen weist das Anschlusselement 10 einen länglichen, balkenartigen Halteabschnitt 28 auf, der in den Abbildungen gemäß Fig. 7 bis 10 gesondert von dem übrigen Anschlusselement 10 dargestellt ist. Dieser längliche Halteabschnitt 28 erstreckt sich in bestimmungsgemäßer Einbaulage horizontal und quer zur Fahrzeug-Längsachse. Der Halteabschnitt 28 weist in zwei seitlichen, voneinander beabstandeten, zur Fahrzeug-Längsachse symmetrischen Bereichen Aufnahmeöffnungen 30 zum Einstecken von an dem Gelenkteil 4 befestigten, bolzenförmigen Steckerteilen 32 auf. Die Steckerteile 32 sind bezüglich ihres Außendurchmessers so an den Innendurchmesser der Aufnahmeöffnungen 30 angepasst, dass sie mit nur geringem Radialspiel einsteckbar sind.

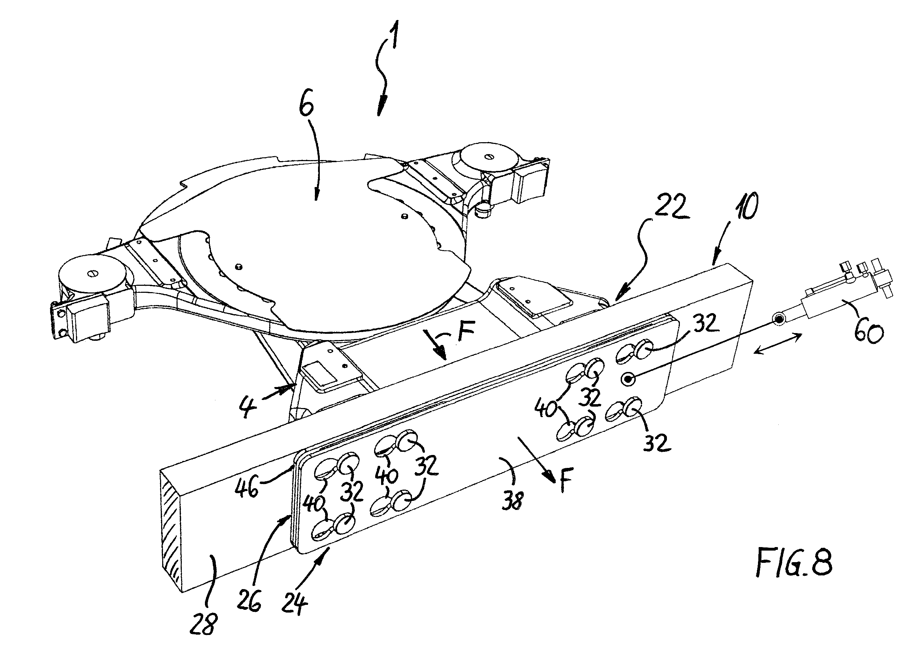

Wie sich beispielhaft für die erste Ausführung aus Fig. 7 und 8 ergibt, können auf jeder Seite mehrere, wie dargestellt beispielsweise vier Aufnahmeöffnungen 30 und eine entsprechende Anzahl von Steckerteilen 32 vorgesehen sein.

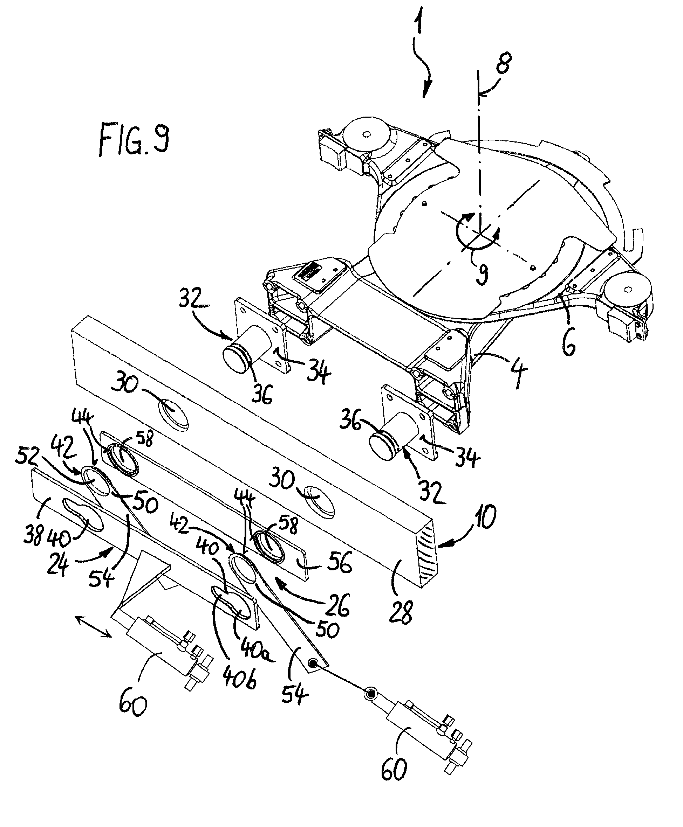

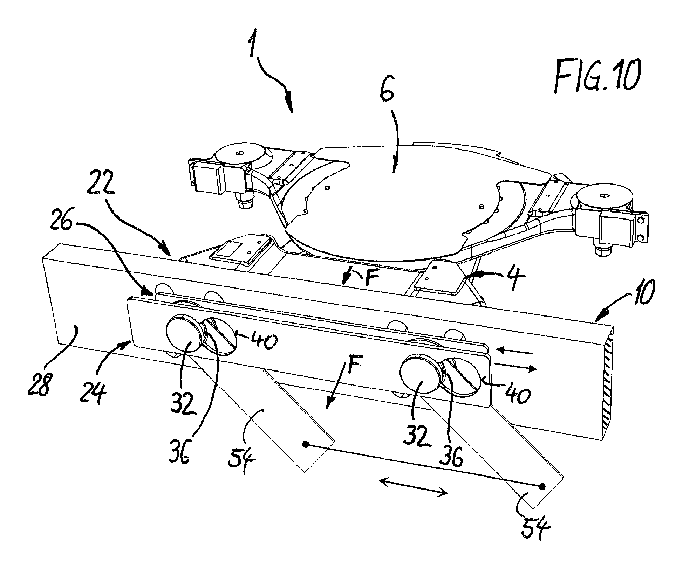

In der Ausführung gemäß Fig. 9 und 10 ist beispielhaft auf jeder Seite nur eine Aufnahmeöffnung 30 für eines von insgesamt nur zwei Steckerteilen 32 vorgesehen.

Die Steckerteile 32 sind bezüglich ihrer Länge so an die Dicke des Halteabschnitts 28 des Anschlusselementes 10 angepasst, dass jedes Steckerteil 32 in einem bis zu einem Endanschlag 34 ein- und durchgesteckten Zustand den Halteabschnitt 28 auf der gegenüberliegenden Seite durch die Aufnahmeöffnung 30 hindurch mit einem Endabschnitt überragt, wobei dieser Endabschnitt auf seiner Außenumfangsfläche eine umfangsgemäße, radial nach außen offene Verriegelungsnut 36 aufweist.

Die Verriegelungseinrichtung 24 weist in den bevorzugten Ausführungen einen plattenförmigen Riegelschieber 38 auf, der auf der von den Gelenkteilen 4, 6 abgekehrten Seite des Halteabschnitts 28 verschiebbar angeordnet ist. Hierbei weist der Riegelschieber 38 für jedes Steckerteil 32 eine Verriegelungsöffnung 40 auf, die nach Art eines Schlüssellochs aus einem Durchsteckbereich 40a und einem verengten Riegelbereich 40b besteht. Der Riegelschieber 38 ist zweckmäßig linear, insbesondere in Längsrichtung des länglichen Halteabschnitts 28 des Anschlusselementes 10, zwischen einer Lösestellung und einer Riegelstellung verschiebbar. In der Lösestellung sind die Steckerteile 32 mit ihren freien Enden durch die Durchsteckbereiche 40a der Verriegelungsöffnungen 40 ein- und ausführbar. In der Riegelstellung greift der Riegelschieber 38 mit den verengten Riegelbereichen 40b der Verriegelungsöffnungen 40 sekantenartig in die Verriegelungsnuten 36 der Steckerteile 32 ein, so dass die Steckerteile 32 gegen Herausziehen verriegelt sind.

Was nun die Spanneinrichtung 26 betrifft, so weist diese mindestens ein Spannelement 42 auf, welches im Bereich zwischen dem Halteabschnitt 28 des Anschlusselementes 10 und dem Riegelschieber 38 derart zwischen einer Lösestellung und einer Spannstellung beweglich angeordnet ist, dass durch eine Bewegung von der Lösestellung in die Spannstellung der Riegelschieber 38 in der von dem Halteabschnitt 28 wegweisenden Richtung mit einer Spannkraft F (siehe Fig. 8 und 10) beaufschlagt wird, so dass über die verriegelten Steckerteile 32 das Gelenkteil 4 mit dem Endanschlag 34 fest gegen den Halteabschnitt 28 verspannt wird. Dies wird dadurch erreicht, dass das bzw. jedes Spannelement 42 keilartige Spannflächen 44 aufweist.

Die beiden Ausführungsbeispiele gemäß Fig. 7 und 8 einerseits und Fig. 9 und 10 andererseits unterscheiden sich besonders durch die Ausführung der Spanneinrichtung 26.

Bei der ersten Ausführung gemäß Fig. 7 und 8 ist als Spannelement 42 ein plattenförmiger, linear verschiebbarer Spannschieber 46 vorgesehen, der bevorzugt - ebenso wie der Riegelschieber 38, allerdings jeweils gegenläufig - in Längsrichtung des Halteabschnitts 28 verschiebbar geführt ist. Dieser Spannschieber 46 weist zwei keilartige Spannflächen 44 auf, die gemäß Fig. 7 auf jeder Seite im Bereich zwischen den einzusteckenden Steckerteilen 32 angeordnet sind. Die Spannflächen 44 wirken mit gegenläufigen Keilflächen des Riegelschiebers 38 zusammen, wobei diese gegenläufigen Keilflächen des Riegelschiebers 38 in den Zeichnungen nicht erkennbar sind. Über die Keilflächen wird durch eine relative, gegenläufige Verschiebung des Spannschiebers 46 und des Riegelschiebers 38 deren gegenseitiger Abstand verändert. Dadurch kann der Riegelschieber 38 von dem Halteabschnitt 28 parallel weggedrückt werden, um die Spannkraft F zu erzeugen.

Wie sich weiterhin aus Fig. 7 ergibt, weist der Spannschieber 46 Öffnungen 48 zum Durchführen der Steckerteile 32 auf. Bevorzugt sind diese Öffnungen 48 als zusätzliche, schlüssellochartige Riegelöffnungen ausgebildet, die allerdings vorzugsweise gegenüber den Verriegelungsöffnungen 40 des Riegelschiebers 38 gegenläufig orientiert sind, und zwar wegen der gegenläufigen Riegel- und Spannbewegungen des Riegelschiebers 38 und des Spannschiebers 46.

Bei dieser ersten Ausführung gemäß Fig. 7 und 8 können der Riegelschieber 38 und der Spannschieber 46 gleichzeitig gegenläufig verschoben werden, wodurch zunächst die Verriegelung und direkt anschließend das Verspannen erfolgt. Diese gegenläufige Verschiebung kann mit Vorteil über eine gelenkige Antriebswippe 49 erfolgen, wie dies in Fig. 7 schematisch angedeutet ist.

Bei der zweiten, besonders vorteilhaften Ausführung gemäß Fig. 9 und 10, bei der ja auf jeder Seite nur ein Steckerteil 32 und eine Aufnahmeöffnung 30 vorhanden sind, weist die Spanneinrichtung 26 zwei Spannelemente 42 auf. Bei dieser Ausführung ist jedes Spannelement 42 als Drehspanner 50 ausgebildet, der eine zu seiner Drehachse koaxiale Durchführöffnung 52 für das jeweilige Steckerteil 32 aufweist. Hierbei ist jeder Drehspanner 50 durch Verdrehen bzw. Verschwenken mittels eines Schwenkhebels 54 verspannbar, wobei der Drehspanner 50 in seinem die Durchführöffnung 52 umschließenden Bereich eine gewindeartige Spannfläche 44 aufweist, die mit einer entsprechenden Gegenspannfläche zusammenwirkt, die vorzugsweise an einem plattenartigen, am Halteabschnitt 28 befestigten Zusatzteil 56 gebildet ist. Auch dieses Zusatzteil 56 weist entsprechende Durchführöffnungen 58 für die Steckerteile 32 auf; siehe dazu Fig. 9.

Bei dieser Ausführung gemäß Fig. 9 und 10 werden zunächst die Steckerteile 32 nach dem Einstecken durch Verschieben des Riegelschiebers 38 verriegelt. Erst dann erfolgt das Verspannen mittels der Drehspanner 50 durch Verschwenken der Schwenkhebel 54.

Die erfindungsgemäße Schnellkupplungseinrichtung 22 kann wahlweise manuell, insbesondere über eine geeignete mechanische Hebelanordnung, und/oder motorisch, insbesondere über eine bevorzugt pneumatische oder aber hydraulische Druckmittel-Zylinderanordnung betätigt werden. Dies gilt für die Verriegelungseinrichtung 24 und/oder die Spanneinrichtung 26. Beispielhaft sind in Fig. 7 bis 9 schematisch Druckmittel-Zylinder 60 eingezeichnet.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Drehgelenk (1) für ein Gelenkfahrzeug (2), bestehend aus zwei um eine Drehachse (8) relativ zueinander drehbeweglich miteinander verbundenen Gelenkteilen (4, 6), wobei jedes Gelenkteil (4, 6) ein Anschlusselement (10, 12) zur starren Befestigungsverbindung mit einem Fahrzeugteil (2a, 2b) des Gelenkfahrzeugs (2) aufweist,
**dadurch gekennzeichnet, dass** mindestens eines der Gelenkteile (4, 6) mit seinem zugehörigen Anschlusselement (10/12) über eine Schnellkupplungseinrichtung (22) trennbar und kuppelbar verbunden ist.

2. Drehgelenk nach Anspruch 1,
**dadurch gekennzeichnet, dass** die Schnellkupplungseinrichtung (22) zwischen dem an einem vorderen Fahrzeugteil (2a) befestigten oder zu befestigenden Anschlusselement (10) und dem zugehörigen Gelenkteil (4) vorgesehen ist.

3. Drehgelenk nach Anspruch 1 oder 2,
**dadurch gekennzeichnet, dass** die Schnellkupplungseinrichtung (22) als eine über eine Verriegelungseinrichtung (24) lösbar verriegelbare Steckkupplung ausgebildet ist.

4. Drehgelenk nach einem der Ansprüche 1 bis 3,
**dadurch gekennzeichnet, dass** das Gelenkteil (4) über eine Spanneinrichtung (26) spielfrei mit einer Spannkraft (F) gegen das Anschlusselement (10) verspannbar ist.

5. Drehgelenk nach einem der Ansprüche 1 bis 4,
**dadurch gekennzeichnet, dass** das Anschlusselement (10) einen länglichen, balkenartigen Halteabschnitt (28) aufweist, der sich in bestimmungsgemäßer Einbaulage quer zu einer Fahrzeug-Längsachse erstreckt, und der in seinen seitlichen, voneinander beanstandeten Bereichen Aufnahmeöffnungen (30) für an dem Gelenkteil (4) befestigte, bolzenförmige Steckerteile (32) aufweist.

6. Drehgelenk nach Anspruch 5,
**dadurch gekennzeichnet, dass** auf jeder Seite eine oder mehrere Aufnahmeöffnungen (30) für eine entsprechende Anzahl von Steckerteilen (32) vorgesehen ist/sind.

7. Drehgelenk nach Anspruch 5 oder 6,
**dadurch gekennzeichnet, dass** jedes Steckerteil (32) in einem eingesteckten Zustand den Halteabschnitt (28) des Anschlusselementes (10) durch die Aufnahmeöffnung (30) hindurch mit einem Endabschnitt überragt, wobei der Endabschnitt eine umfangsgemäße Verriegelungsnut (36) aufweist.

8. Drehgelenk nach einem der Ansprüche 5 bis 7,
**dadurch gekennzeichnet, dass** die Verrieglungseinrichtung (24) einen plattenförmigen Riegelschieber (38) aufweist, der auf der von den Gelenkteilen (4, 6) abgekehrten Seite des Halteabschnitts (28) verschiebbar angeordnet ist, wobei der Riegelschieber (38) für jedes Steckerteil (32) eine Verriegelungsöffnung (40) aufweist, die nach Art eines Schlüsselloches aus einem Durchsteckbereich (40a) und einem verengten Riegelbereich (40b) besteht.

9. Drehgelenk nach Anspruch 7 oder 8,
**dadurch gekennzeichnet, dass** der Riegelschieber (38) linear, insbesondere in Längsrichtung des balkenartigen Halteabschnitts (28) des Anschlusselementes (10), zwischen einer Lösestellung und einer Riegelstellung verschiebbar ist, wobei in der Lösestellung die Steckerteile (32) durch die Durchsteckbereiche (40a) der Verriegelungsöffnungen (40) ein- und ausführbar sind, und wobei in der Riegelstellung der Riegelschieber (38) mit den verengten Riegelbereichen (40b) der Verriegelungsöffnungen (40) in die Verriegelungsnuten (36) der Steckerteile (32) eingreift.

10. Drehgelenk nach Anspruch 4 und Anspruch 8 oder 9,
**dadurch gekennzeichnet, dass** die Spanneinrichtung (26) mindestens ein Spannelement (42) aufweist, welches im Bereich zwischen dem Halteabschnitt (28) des Anschlusselementes (10) und dem Riegelschieber (38) derart zwischen einer Lösestellung und einer Spannstellung beweglich angeordnet ist, dass durch eine Bewegung von der Lösestellung in die Spannstellung der Riegelschieber (38) in der von dem Halteabschnitt (28) wegweisenden Richtung mit der Spannkraft (F) beaufschlagt wird, so dass über die Steckerteile (32) das Gelenkteil (4) fest gegen den Halteabschnitt (28) verspannt wird.

11. Drehgelenk nach Anspruch 10,
**dadurch gekennzeichnet, dass** das/jedes Spannelement (42) keilartige Spannflächen (44) aufweist.

12. Drehgelenk nach Anspruch 10 oder 11,
**dadurch gekennzeichnet, dass** das Spannelement (42) als ein plattenförmiger, linear verschiebbarer Spannschieber (46) ausgebildet ist, wobei der Spannschieber (46) mit seinen keilartigen Spannflächen (44) an gegenläufigen Keilflächen des Riegelschiebers (38) anliegt.

13. Drehgelenk nach Anspruch 12,
**dadurch gekennzeichnet, dass** der Spannschieber (46) Öffnungen (48) zum Durchführen der Steckerteile (32) aufweist, wobei bevorzugt die Öffnungen (48) des Spannschiebers (46) als zusätzliche, schlüssellochartige Riegelöffnungen ausgebildet sind.

14. Drehgelenk nach Anspruch 10 oder 11,
**dadurch gekennzeichnet, dass** die Spanneinrichtung (26) zwei Spannelemente (42) aufweist, wobei jedes Spannelement (42) als Drehspanner (50) ausgebildet ist, der durch Verdrehen mittels eines Schwenkhebels (54) über gewindeartige Spannflächen (44) verspannbar ist, wobei jeder Drehspanner (50) eine zu seiner Drehachse koaxiale Durchführöffnung (52) für eines von insgesamt zwei Steckerteilen (32) aufweist.

15. Drehgelenk nach einem der Ansprüche 1 bis 14,
**dadurch gekennzeichnet, dass** die Schnellkupplungseinrichtung (22), und zwar deren Verriegelungseinrichtung (24) und/oder Spanneinrichtung (26), motorisch, insbesondere über eine Druckmittel-Zylinderanordnung, und/oder manuell, beispielsweise über eine mechanische Hebelanordnung, betätigbar ist.
